# EUROPEAN PATENT APPLICATION

(11) **EP 1 923 799 A2**
(43) Date of publication of application: **21.05.2008**
(21) Application number: 07120475.4
(22) Date of filing: 12.11.2007
(51) Int. Cl.: G06F 17/30, H04L 29/06

(54) **An advertisement for a mobile terminal device in connection with a service and a server for implementing the same**

(30) Priority: 16.11.2006 FI 20065730
(71) Applicant: Fonecta Ltd., 00510 Helsinki (FI)
(72) Inventor: Wahlström, Rauno, 00210, Helsinki (FI)
(74) Representative: Kärkkäinen, Veli-Matti

(57) **Abstract**

This invention relates to displaying advertisements in mobile terminal devices in connection with other services. In particular, this invention relates to displaying browser-based advertisements in terminal devices with small screens. Further, the invention relates to displaying advertisements in connection with a service initiated by sending a link to a browser of the service user's mobile terminal device.

## Description

### Field of the invention

This invention relates to displaying advertisements in mobile terminal devices in connection with other services. In particular, this invention relates to displaying browser-based advertisements in terminal devices with small screens. Furthermore, the invention relates to display ing advertisements in connection with a service that is initiated by sending a link to a browser of a service user's mobile terminal device.

### Background of the invention

Browser-based Internet advertising has grown into a major business with Internet use becoming more common. Millions and millions of Internet documents have encouraged advertisers to use this media to advertise their products.

Internet advertising is typically either of two types: banners opened in connection with a document, or paid links displayed in connection with a search engine's search result.

Banners opened in connection with a document are separate browser pop-up windows opened based on instructions embedded in the HTML code of the document to be opened or separate frames in the actual HMTL information page, in which frames the advertisement is displayed and by clicking which the user is able to download to his/her browser an HTML page introducing the product or enabling product orders. Such means are suitable for an ordinary computer and a browser used on it as the screen of an ordinary computer is large and the browser window has ample enough room for advertisements in addition to the actual desired content of the document to be opened, which advertisements the user may choose to ignore or pop-up windows of which the user can easily close using the ordinary computer's easy-to-use graphical user interface. However, in a mobile terminal device with a small screen such advertisements annoy the user. Firstly, advertisements displayed in pop-up windows cover the actual information page retrieved under them and are difficult to close using the mobile terminal device's user interface. The same applies to an advertisement displayed in a separate frame of the actual information page; it confuses the layout of the page and makes it difficult to display the actual information.

Paid links displayed in connection with a search engine's search result also take up room on a small screen. It often happens that the user does not even notice the advertisement links as they have been cropped outside the screen.

Thus both methods for displaying advertisements in connection with Web content according to prior art have their own problems and shortcomings when Web content is displayed in a device with a small screen, typically a mobile terminal device of a mobile telephone network.

### Brief description of the invention

An object of the present invention is to display an advertisement in connection with a service and/or content provided to a mobile terminal device so that the advertisement and the content page of the actual service do not interfere with each other.

Particularly, an object of the invention is a method for displaying an advertisement in a media device of a mobile terminal device in connection with displaying content related to another service in a system comprising a server and mobile terminal devices, wherein the server sends a link pointing to content related to a service, addressed to a mobile terminal device using the service, and wherein, when a media reproducer of the terminal device using the service requests said content related to the service, the server sends an advertisement to be displayed by the media reproducer.

A further object of the invention is a server for arranging the display of an advertisement in a media device of a mobile terminal device in connection with arranging the display of content related to another service in a system comprising mobile terminal devices in addition to the server, wherein the server comprises means for sending a link pointing to content related to a service, addressed to a mobile terminal device using the service, and means for sending an advertisement to be displayed by a media reproducer of the mobile terminal device using the service when said media reproducer requests said content related to the service.

The objects, features and advantages of the invention will become apparent to a person skilled in the art based on the following detailed description of a preferred embodiment of the invention and the figures.

### Brief description of the figures

Figure 1 shows the set-up, message sequence and release of a TCP/IP connection according to the HTTP protocol.
Figure 2 illustrates transmission of an HTTP link pointing to a content page of a service in a method according to the invention.
Figure 3 describes how an advertisement is displayed according to the invention.
Figure 4 illustrates a subsequent downloading of an actual information page in the service according to the invention.
Figure 5 illustrates the operation of a server according to the invention as the service progresses.

### Detailed description of the figures

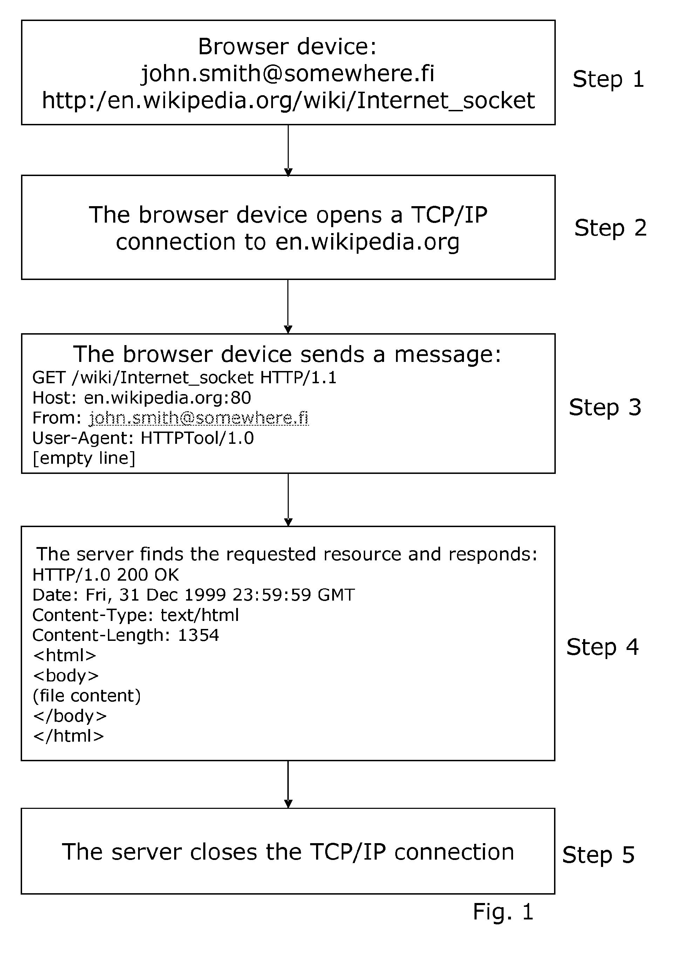

Figure 1 describes, on a general level, the HTTP protocol and the set-up, message sequence and release of a TCP/IP connection according to the HTTP protocol. The HTTP protocol (or WAP protocol) is a protocol intended for use b y browsers for retrieving documents (or, more generally, resources) from a server.

When a user, whose e-mail address is john.smith@somewhere.fi, for example, writes the URL http://en.wikipedia.org/wiki/Internet_socket in a browser and presses Enter at Step 1, the following takes place:
The browser opens a TCP connection (TCP socket) to the server en.wikipedia.org (Step 2);
At Step 3 the browser sends an HTTP-get message through the connection set up at Step 2;
At Step 4 the browser locates the requested file and returns an HTTP-response message containing the requested file through the same connection;

When the entire response has been transmitted, the server closes the connection at Step 5. The user's browser displays the received document modified according to HTML coding.

Therefore, the HTTP protocol was originally intended for retrieving, for a server, HTML-coded documents located on the serve r and for displaying them on a client computer. Currently, the HTTP protocol has also found its use in service logics located on a server with given parameters. The parameters are separated from the remaining call with a question mark. For example, a message according to the HTTP address http://www.02.fi/hae/id?10302FrD2rB2wr21r13164 calls a service program located in the directory /hae/id on the server www.02.fi with the parameter 10302FrD2rB2wr21r13164. Typically, the called service program executes its task using the provided parameter(s). After executing its task, the service program sends its response in a textual format over the original TCP connection to the caller. When the entire response has been transmitted, the called service program closes the TCP connection used. Therefore, the HTTP protocol is no longer only used by browsers, but also applications and service logics located in different network elements calling each other, sometimes acting as clients and sometimes as each other's servers. Hereinafter in the specification of the present invention the term "HTTP address" may (depending on the context) refer to a connection set-up and message transmission sequence identical to the connection set-up and message transmission caused by the HTTP address in a browser, even if the actual connection set-up and message transmission were not initiated by a browser.

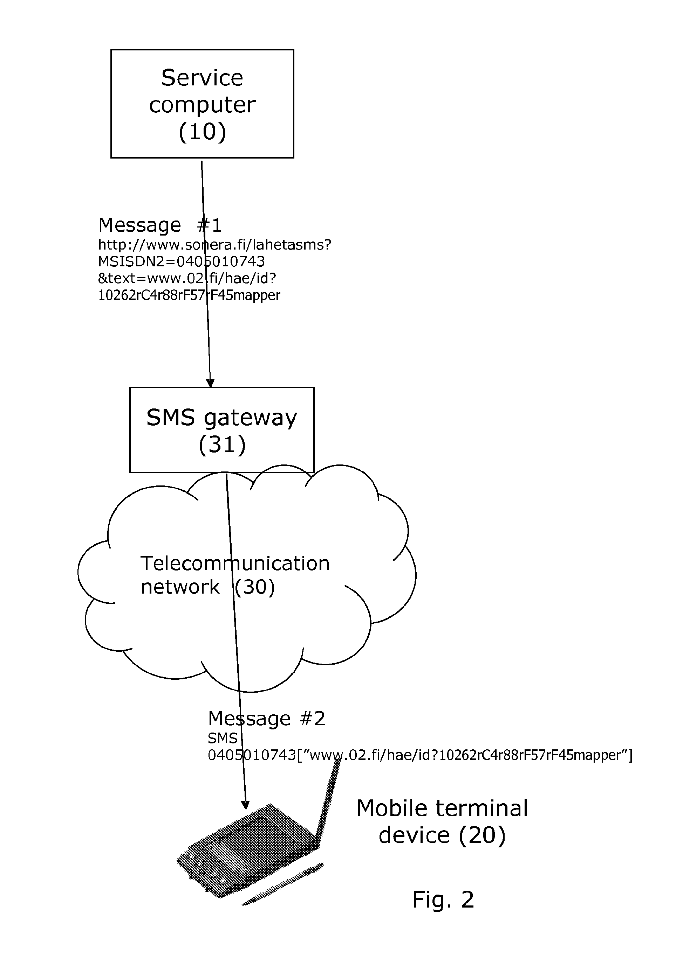

By way of example, the display of an advertisement in connection with another service according to the invention can be implemented on a mobile terminal device of an existing GSM/3G network in the manner shown in Figures 2 to 4. A telecommunications operator (for example, Sonera, Elisa, DNA, etc.) operates its telecommunication network (30) where a user of a mobile terminal device (20) is one subscriber. The telecommunication network (30) provides modem telecommunication services, such as voice and video calls, transmission of SMS messages, transmission of multimedia messages, positioning of mobile terminal devices and TCP/IP or WAP data connections for use by a browser located in a mobile terminal device. The telecommunication network (30) may also provide other services, such as "streaming media" services. The telecommunication network (30) may also be some other network (other than GSM/3G) with mobile terminal devices. From the point of view of the invention, it is essential that the telecommunication network provides mobile terminal devices with some type of message transmission service, a TCP/IP or WAP data connection service for use by a browser or some other media reproducer.

In the following, the invention will be described by means of an example shown in Figures 2, 3 and 4 in order to illustrate the invention. The description of the invention according to the example is not intended as limiting, but only to show how the invention can be taken into use using the current technology in mobile terminal devices of current telecommunication networks.

The display of an advertisement in connection with a service according to the example begins in Figure 2 when a service computer (10) has collected parameters related to a service transaction and stored them in a file saved under the name of an individual transaction ID created by it, "10262rC4r88rF57rF45mapper", for example. The service transaction may, for example, be a service according to the co-pending patent application by the same applicant, "Combined Map and Positioning Service", or some similar service, wherein a service request has earlier arrived to the service computer (10) implementing the service.

Next, a service logic on the service computer (10) creates message #1 containing a URL pointing to the file saved under the name of the transaction ID and an MSISDN number of a mobile terminal device. The service computer (10) sends message #1 to an SMS gateway (32) of the telecommunication network (30) at http://www.sonera.fi/lahetasms. An SMS service program waiting at the address creates message #2 based on the information in message #1. Message #2 is an SMS message according to the WAP push specification addressed to an MSISDN number 0405010743 and that contains an HTTP address pointing to the file saved under the name of the transaction ID, http://www.02.fi/hae/id?10262rC4r88rF57rF45mapper. However, the invention is not limited to the use of SMS messages; rather it is possible to implement the display of advertisements according to the invention by means of any message system supporting the sending of HTTP addresses. For example, the SMS gateway could be replaced by an e-mail gateway comprising corresponding functionality without departing from the idea of the invention.

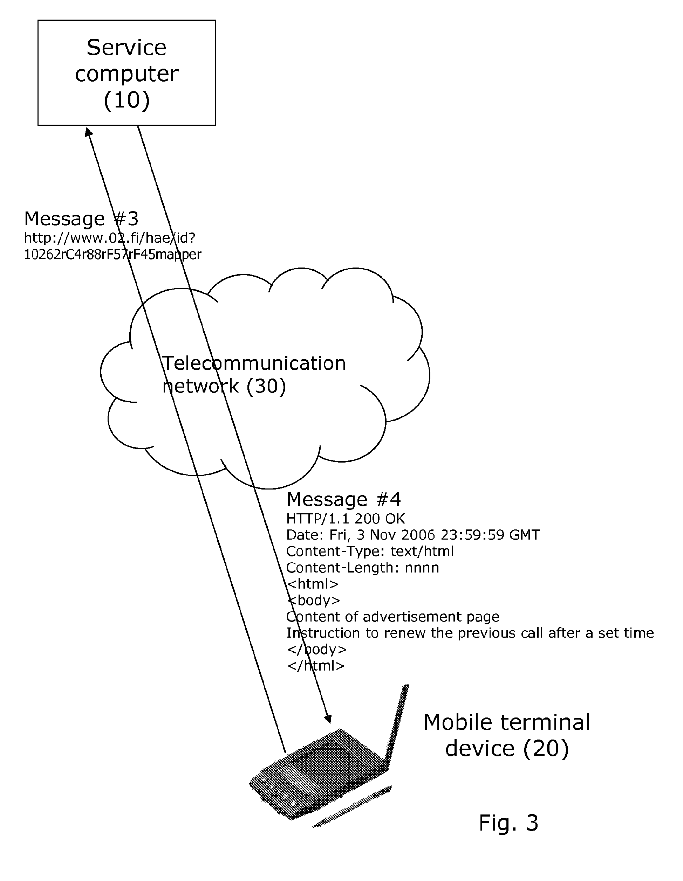

Referring to Figure 3, the user of the mobile terminal device (20) requesting positioning clicks the HTTP address (URL link) shown in the received message, which activates a browser contained in the mobile terminal device. The browser opens a TCP/IP connection to the service computer (10) at the address www.02.fi and requests the resource /hae/id on the service computer with the parameter 10262rC4r88rF57rF45mapper in message #3. Message #3 is thus the first message according to the HTTP (or WAP) protocol from the mobile terminal device (20) over the TCP/IP connection.

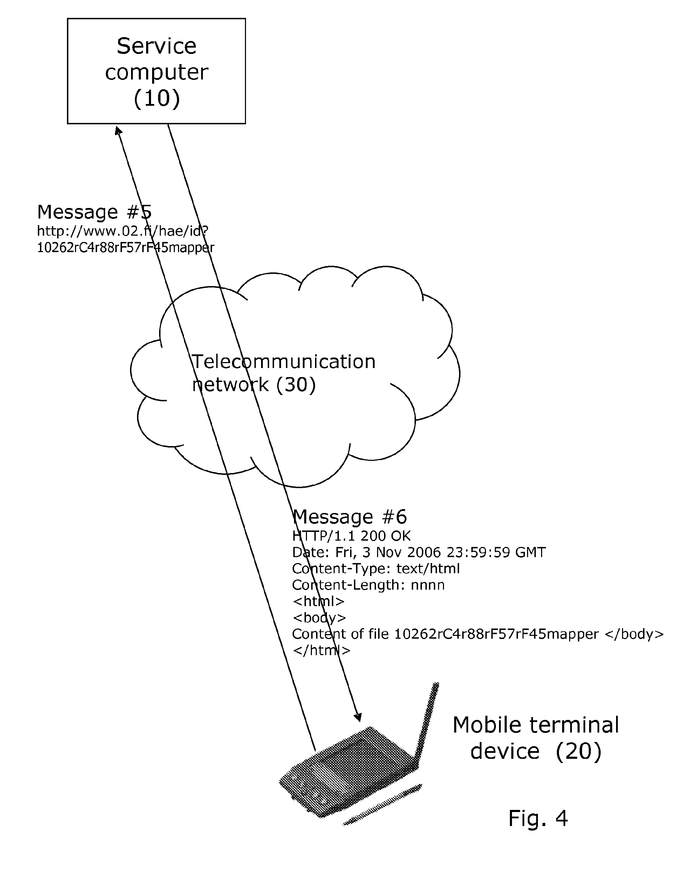

The service computer recognizes the requested resource (file) to be such that an advertisement is to be displayed in connection with it and sees, in a status table maintained by it, that this was the first time that the resource is requested. Accordingly, the service computer (10) decides to first send an advertisement to be displayed by the browser of the mobile terminal device in message #4. The browser of the mobile terminal device displays the advertisement and, when a delay programmed in the HTML code of the advertisement page has elapsed, the browser renews its previous call. The browser sends the call in message #5 shown in Figure 4. The service computer (10) can make use of the time between the first and second time said resource is requested by putting together the actual content of the file related to the service.

This time the service computer recognizes the requested resource (file) and sees in the status table maintained by it that the resource is requested for a second time and that the advertisement to be displayed when the resource in question is requested has already been displayed. Subsequently, the service computer (10) sends the actual content of the file related to the service to the mobile terminal device (20) in message #6.

Subsequently, the execution of the service progresses as without the display of the advertisement in connection with the service according to the invention. An example of the progress of the service from this point onwards can be found in the patent application by the same applicant, "Combined Map and Positioning Service", filed on the same day as this application.

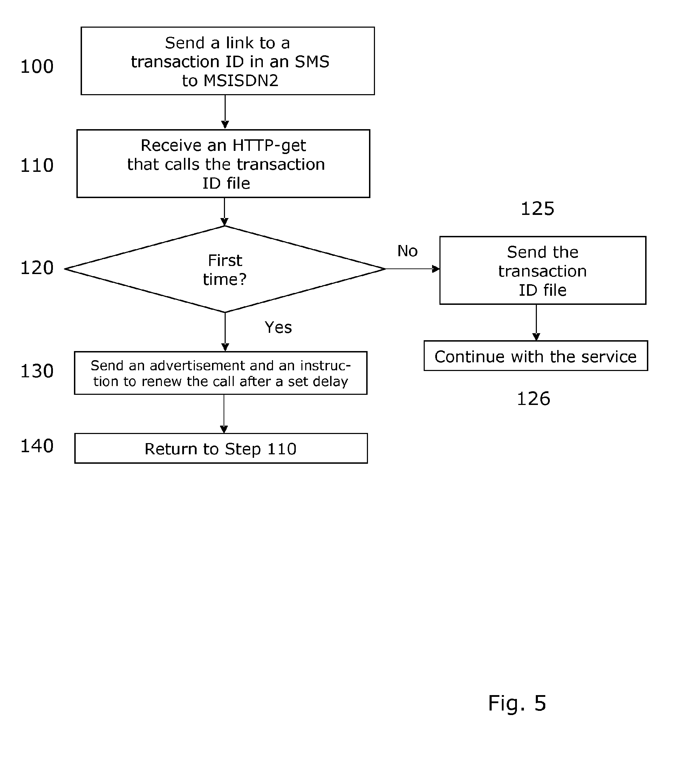

The server (10) implementing the service is a service provider's computer where the logic implementing the service and other service logics are programmed. In addition, the server comprises normal server features, such as telecommunication software (here, for example, TCP/IP-based telecommunication software). Next, the flow diagram shown in Figure 5, illustrating the operation of the server in connection with the execution of the service, will be described in more detail.

The execution of an advertisement to be displayed in connection with a service begins at Step 100, where a service computer sends a link addressed to a mobile terminal device using the service, as described above. The link points to a file where information necessary for the execution of the service is collected. The file is intended to be downloaded for use by a media reproducer (a browser, for example) of the mobile terminal device using the service so that the user can experience the service ordered by him/her by means of the media reproducer.

When the user clicks the received link, the mobile terminal device used by him/her opens the browser or other media reproducer, which in turn creates a connection to the server and requests the content of a file saved under the name of a transaction ID, whereby the execution of the service continues as described in connection with the figures shown above. At Step 110, the server receives an HTTP-get message caused by clicking the link and requesting the content of the file named after the transaction ID and indicated by the link. Now the server 10 proceeds to Step 120, where it checks in an internal auxiliary table whether this is the first time the transaction ID is called. If this is the first time the server 10 sends, at Step 130, an advertisement to be displayed by the media reproducer of the mobile terminal device, and an instruction to call the transaction ID again after a certain delay, for example three seconds. The delay is set so that the user has time to read the advertisement during the delay but short enough not to annoy the user. Subsequently, at Step 140, the server returns to Step 110 to wait for a new HTTP-get message pointing to the transaction ID. At Step 110, when the server receives a message requesting the content of the file named after the transaction ID a second time after a delay, the server proceeds to step 120 again to check whether this is the first time. As the server had made an entry in its auxiliary table in connection with the first time, it recognizes now that this is not the first time. After the check, the server proceeds to Step 125, where it sends the actual file named after the transaction ID to the mobile terminal device using the service. Subsequently, the server proceeds to the next step 126 in order to continue the service in the normal manner.

It is also possible to implement the service according to the present invention in such a way that the link pointing to the file saved under the name of the transaction ID and sent in an SMS message by means of the WAP Push technique is not identical with the link embedded in the advertisement page, whereby the server will recognize from the difference between the links whether this is the first or the second call. The only difference to the flow chart presented above concerns Step 120, where the link will be examined instead of the times the same link is called.

## Claims

1. A method for displaying an advertisement in a media device of a mobile terminal device in connection with displaying content related to another service in a system comprising a server and mobile terminal devices, wherein the server sends a link pointing to content related to a service, addressed to a mobile terminal device using the service, and wherein, when a media reproducer of the mobile terminal device using the service requests said content related to the service, the server sends to the mobile terminal device using the service an advertisement to be displayed by said media reproducer and an instruction to request said content related to the service after a predetermined delay.

2. A method according to claim 1, further **characterized in that** the server sends the content related to the service to the media reproducer of the mobile terminal device using the service only after the media reproducer requests it a second time.

3. A method according to claim 1, further **characterized in that** the server makes use of the time between the first and second time said content related to the service is requested by putting together content related to the service.

4. A method according to claim 1, further **characterized in that** the server sends said link to be received by the mobile terminal device using the service by other means than over a connection set up by the media reproducer of the mobile terminal device.

5. A method according to claim 1, further **characterized in that** the server sends said link to be received by the mobile terminal device using the service in an SMS message.

6. A method according to any of claims 1 to 5 or a combination thereof.

7. A server for arranging the display of an advertisement in a media device of a mobile terminal device in connection with arranging the display of content related to another service in a system comprising mobile terminal devices in addition to the server, wherein the server comprises means for sending a link pointing to content related to a service, addressed to a mobile terminal device using the service, and means for sending an advertisement to be displayed by a media reproducer of the mobile terminal device using the service when said media reproducer requests said content related to the service, and for sending an instruction for the mobile terminal device using the service to request said content related to the service again after a predetermined delay.

8. A server according to claim 7, further **characterized in that** the server comprises means for sending the content related to the service to the media reproducer of the mobile terminal device using the service only after the media reproducer requests it a second time.

9. A server according to claim 7, further **characterized in that** the server comprises means for making use of the time between the first and second time said content related to the service is requested by putting together content related to the service.

10. A server according to claim 7, further **characterized in that** the server comprises means for sending said link to be received by the mobile terminal device using the service in an SMS message.

11. A server according to any of claims 7 to 10 or a combination thereof.
